# EUROPÄISCHE PATENTSCHRIFT

(11) **EP 0 583 296 B1**
(45) Veröffentlichungstag und Bekanntmachung des Hinweises auf die Patenterteilung: **06.12.1995**
(21) Anmeldenummer: 92909424.1
(22) Anmeldetag: 30.04.1992
(51) Int. Cl.: B65G 47/252

(54) **VERFAHREN UND VORRICHTUNG ZUM POSITIONIEREN VON SPULEN**
PROCESS AND DEVICE FOR POSITIONING COILS
PROCEDE ET DISPOSITIF DE POSITIONNEMENT DES BOBINES

(30) Priorität: 30.04.1991 DE 4114173
(43) Veröffentlichungstag der Anmeldung: 23.02.1994
(73) Patentinhaber: Rieter Ingolstadt Spinnereimaschinenbau AG, 85055 Ingolstadt (DE)
(72) Erfinder: HOEGEN, Bernhard, D-8070 Ingolstadt (DE); BRAUN, Ludwig, D-8070 Ingolstadt (DE); KOVACS, Ottmar, D-8434 Berching (DE); UEDING, Michael, D-8070 Ingolstadt (DE)
(86) Internationale Anmeldenummer: EP9200950
(87) Internationale Veröffentlichungsnummer: WO9219519

(56) Entgegenhaltungen:
- EP-A- 0 124 060
- DE-A- 3 742 112
- DE-A- 3 742 220

## Beschreibung

Die Erfindung betrifft ein verfahren und eine Vorrichtung gemäß Oberbegriff der Ansprüche 1 und 7.

Moderne Spinnmaschinen sind üblicherweise Transporteinrichtungen zugeordnet, die die an diesen Maschinen produzierten Garnspulen aufnehmen bzw. zwischenlagern und zur Verpackung abführen. Üblicherweise werden Garnspulen auf Paletten für den Versand so verpackt, daß die Spulen mit stehender Spulenachse auf der Palette angeordnet sind, um die Garnlagen zu schonen. Die Spulen, die mit horizontaler Spulachse von ihrer Wickelstelle kommen, müssen für die Palettierung in diese Palettierlage gebracht und möglichst ohne Berührung der Garnlagen von der Maschine auf die Palette transportiert werden.

Es ist z. B. ein sechsachsiger Handhabungsautomat zur automatischen Spulenabnahme an einer Rotorspinnmaschine bekannt, der mit einem elektronisch gesteuerten Greifer die Spule und deren Orientierung am Ende eines die Spule ausstoßenden Fließbandes einer Rotorspinnmaschine erkennt und greift und elektronisch gesteuert an einen Spulentransportwagen übergibt (VDI-Nachrichten Nr. 44; 30.0kt.87 Seite 36 ff.) Diese Vorrichtung ist außerordentlich teuer und aufwendig durch den Einsatz eines über sechs Achsen gesteuerten Roboters.

Es ist weiterhin bekannt, die Spulen mittels Palettiersystemen zu verarbeiten und die Maschine vollautomatisch zu entsorgen. Um die produzierten Spulen auf den vordefinierten Platz auf der Palette zu bringen, ist es notwendig, exakt ihre Position bzw. die Position der Spulenachse zu kennen, um mit dem Handhabungsautomat ohne Beschädigung die Spule greifen und transportieren zu können. Zu diesem Zweck werden beim Palettieren mit dem System "Pally" die Spulen mit liegender Spulenachse von dem Transportband der Spinnmaschine an das Ende der Maschine geliefert und dort vom Palettiersystem "Pally" abgeholt. Wenn das Palettiersystem sich am Ende des Transportbandes positoniert hat, werden die Spulen auf 2 parallel geführte Transportbänder gekippt. Dabei liegt die aus der Spulenstirnseite herausragende Hülse zwischen den Bändern, die die Spule auf ihrer Stirnseite tragen. Diese parallel geführten Bänder transportieren die gekippten Spulen in die gewünschte Position unter einer Greifvorrichtung, damit diese die Spulen abnehmen kann, um sie auf einer Palette abzulegen. Diese Anordnung ist sehr platzaufwendig und verhältnismäßig kompliziert. Es werden elektronisch gesteuerte Such- und Positioniereinrichtungen benötigt, damit sich die Abnahmevorrichtung an jeder Spinnmaschine auf das entsprechende Spulenformat bzw. zugehörige Lochbild der Zwischenlagen einstellen kann.

Es ist aus der DE-A-39 12 683 eine Vorrichtung bekannt, die aus einem Kipporgan 25 und einem daran angegliederten Positionierbandförderer 26 sowie einer Zentriereinrichtung 35 besteht. Dieses Kipporgan dient dazu, die Achse der Spule durch eine Drehung um 90 Grad vertikal auszurichten. Sie arbeitet über einem horizontalen Positionierbandförderer, der so ausgebildet ist, daß er die Spulen nach ihrer Kippbewegung diesem Positionierbandförderer 26 übergibt, der wiederum die Spule einer Zentriereinrichtung zuführt, die für die genaue Positionierung jeder Spule sorgt, damit ein Greifer 47 die Spule erfassen und einer Ladeebene zuführen kann. Es sind bei dieser Vorrichtung drei Einrichtungen, nämlich Kippeinrichtung, Positionier- und Zentriereinrichtung vorgesehen, um eine Spule zu kippen und in eine Position zu bringen, die für eine Greiferaufnahme vorgesehen ist. Diese Vorrichtung ist verhältnismäßig kompliziert und aufwendig. Außerdem besteht bei der Zentrierung der Spule an ihrem Umfang die Gefahr, daß die Windungen beschädigt werden.

In der DE-A-37 42 220 ist eine gattungsgemäße Vorrichtung und ein Verfahren gezeigt, bei welchen eine Spule gekippt und positioniert wird. Die Spulenachse wird allerdings nicht festgelegt, so daß die Gefahr besteht, daß die Spule beim Aufprall an den Anschlag zurückfedert und die beabsichtigte Position nicht einnimmt.

Aufgabe der vorliegenden Erfindung ist es, die Nachteile des Standes der Technik zu vermeiden und ein Verfahren und eine Vorrichtung zu schaffen, um auf einfache, sichere und raumsparende Weise die von einem Transportband angelieferten Spulen in eine definierte Position zu bringen, von der sie von einer Greifvorrichtung abgenommen werden können.

Die Aufgabe wird erfindungsgemäß durch die Merkmale der Ansprüche 1 und 8 gelöst. Die Spulen werden beim Kippen zusammen mit der Kippbewegung in die für die Greiferaufnahme vorgesehene Position gebracht. Der große Vorteil dieser Lösung liegt darin, daß die beiden Aktionen Spulenkippen und Spulenzentrieren überlagert bzw. kombiniert werden und antriebsmäßig in einer gemeinsamen Vorrichtung betrieben werden. Dies hat den Vorteil, daß nur ein einziger Antrieb vorhanden sein muß, und daß die kombinierte Vorrichtung sehr wenig Platz benötigt. Es ist auch von großem Vorteil, daß für das Positionieren der Spule im Gegensatz zum Stand der Technik keine zusätzliche Zeit benötigt wird, da dieses Positionieren während des Kippvorganges, der sowieso stattfindet, erledigt wird.

Vorzugsweise wird der Kippvorgang durch die mittels der Transportvorrichtung angelieferte Spule in Gang gesetzt und nicht durch äußere Sensoren oder Schalteinrichtungen. Durch diese vorteilhaft direkte Steuerung, die ohne Zwischenglieder auskommt, ist gewährleistet, daß die Kippvorrichtung nicht zu Kippen beginnt, bevor eine Spule vorhanden ist. Es ist von Vorteil, den Kippvorgang erst einmal soweit anlaufen zu lassen bis die Spule in stabilem Gleichgewicht auf der Kippvorrichtung aufliegt und dann erst die Positionierung zu starten. Es wird hierbei auf einfache Weise die Spule nicht nur gekippt, sondern gleichzeitig auch positioniert. Die Spule erfährt dabei auch eine schonende Handhabung.

Durch die Erfindung ist es besonders vorteilhaft, Spulen unabhängig von ihrem Spulendurchmesser und ihrer Konizität in die vorgesehene Position zu bringen. Die Schwierigkeit, verschiedene, von der Spinnmaschine abgelieferte Durchmesser der Spulen handhaben zu müssen, tritt bei dieser Verfahrensweise überhaupt nicht auf, da die Spulen über die Spulenhülse positioniert werden und damit in sehr einfacher Weise immer eine eindeutige Positionierung der Spulenmitte erreicht wird.

In vorteilhafter Weise werden die Positionier- und die Kippvorrichtung mit einem gemeinsamen Antrieb versehen, wobei es weiterhin vorteilhaft ist, zwei Kipp-/Positioniervorrichtungen parallel zueinander anzuordnen und wiederum mit einem gemeinsamen Antrieb zu versehen. Der Antrieb ist vorteilhafterweise als Pneumatikantrieb ausgebildet. Diese Anordnungsweise ist aufgrund der einfachen pneumatischen Energieversorung einem elektromotorischen oder hydraulischen Antrieb überlegen. Es sind aber auch derartige Antriebe einsetzbar. In vorteilhafter Weise ist die Positioniervorrichtung mit nur einem beweglichen Anschlag versehen. Dieser Anschlag ist in einer Längsbewegung verschieblich und im Gegensatz zu mehreren beweglichen Anschlägen, die sich zum Teil auch auf komplizierten Bahnen bewegen, einfach und funktionssicher. Weitere vorteilhafte Ausbildungen der Erfindung sind in den Unteransprüchen beschrieben.

Eine Ausführung der Erfindung ist in den Figuren dargestellt und wird im folgenden näher beschrieben.

Es zeigt
- Figur 1 eine erfindungsgemäße Vorrichtung in der Seitenansicht vor dem Kippen der Spule,
- Figur 2 die Seitenansicht der Vorrichtung während des Kippens,
- Figur 3 die Vorrichtung in der Seitenansicht nach dem Kippen der Spule,
- Figur 4 eine erfindungsgemäße Vorrichtung in der Vorderansicht vor dem Kippen.

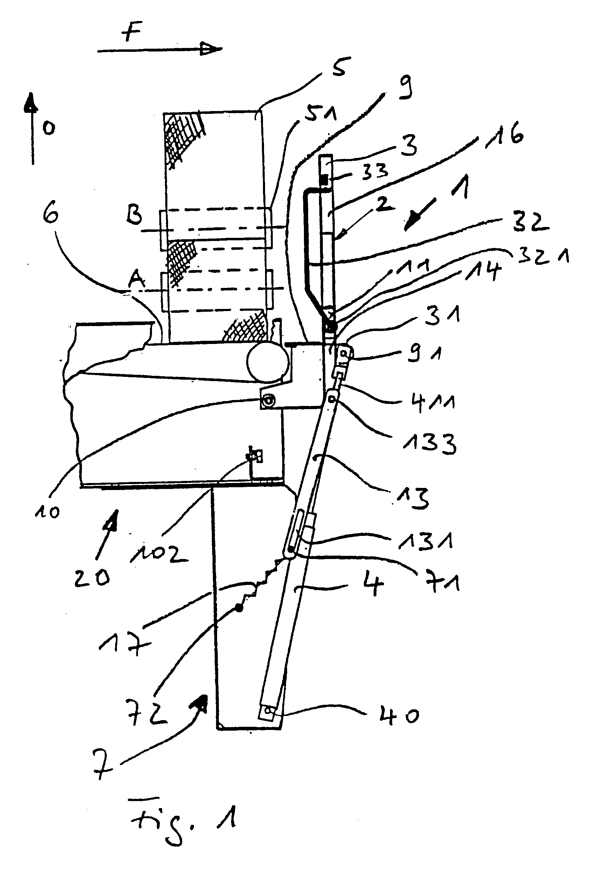

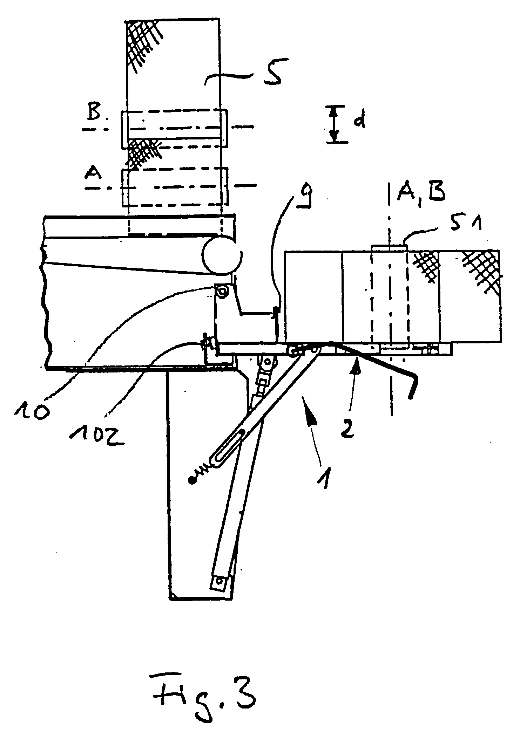

Die Figur 1 zeigt eine Ausbildung der erfindungsgemäßen Vorrichtung in der Seitenansicht vor dem Kippen einer Spule 5 in der Situation kurz bevor die Spule 5 ein Transportband 6 verläßt und auf ein Tragblech 9 einer Kippvorrichtung 1 gelangt. Das Tragblech 9 kann seitlich mit einer leichten Erhöhung versehen sein, um die Spule 5 soweit vorzuzentrieren, daß ihre Spulenhülse 51 in eine Positioniervorrichtung 2 sicher eingeführt wird. Die Kippvorrichtung 1 ist hier dargestellt in einer an das Ende einer Fördereinrichtung angebauten Version. Dieses Förderband enthält das Transportband 6, auf das von einer nicht gezeigten Vorrichtung Kreuzspulen verschiedener Größen abgelegt werden und von dem Transportband 6 an das Ende des Förderbandes gefördert werden (in diesem Beispiel nach rechts), um von der Kippvorrichtung 1 gekippt und positioniert zu werden, so daß die Spule (in der Stellung wie Figur 3 zeigt) von einem von oben kommenden Handhabungsgerät abgenommen werden kann. Es sind hier zwei verschiedene Spulengrößen gezeigt, nämlich eine kleine Spule mit der Spulenachse "A" und eine große Spule mit der Spulenachse "B". Die Spulen werden vom Transportband 6 in der Richtung "F" (Richtungspfeil "F") gegen eine Platte 3 der Kippvorrichtung befördert.

Die Platte 3 der Kippvorrichtung 1 ist um eine im wesentlichen waagrechte Drehachse 10 drehbar gelagert. Das Tragblech 9 ist ungefähr in der Höhe des Transportbandes 6 im rechten Winkel an der Platte 3 befestigt und setzt sich fort in einem Hebelarm 31, in dessen Lagerpunkt 91 eine Kolbenstange 411 eines Kolbens 41 gelenkig gelagert ist. Der Kolben 41 ist das verschiebliche Teil eines Pneumatikzylinders 4, der mit seinem Zylinderende in einem ortsfesten Lagerpunkt 40 gelenkig gelagert ist. Die Anordnung ist nun günstigerweise so aufeinander abgestimmt, daß der Kolben 41, wenn er die Kolbenstange 411 im Zylinder 4 nach unten bewegt, die Platte 3 um die Achse 10 (in dieser Figur) im Uhrzeigersinn kippt, so daß die Platte 3 im wesentlichen waagrecht zur Ruhe kommt, indem sie gegen einen einstellbaren Anschlag 102, der ortsfest am Ende des Förderbandes 20 angebracht ist, zur Anlage kommt. Es liegt dann die in Figur 3 gezeigte Stellung der gekippten Platte 3 vor. Im Anlenkpunkt 91 des Hebelarmes 31, der fest mit der Platte 3 verbunden ist, ist die Kolbenstange 411 des Pneumatikzylinders 4 gelenkig gelagert. In der schwenkbaren Platte 3 ist nun ein Anschlag 14 angeordnet, der in der Führung 15 verschiebbar ist. Dieser verschiebbare Anschlag 14 weist eine Achse 133 auf, an der eine Koppel 13 gelenkig gelagert ist. Der Anschlag 14 ist frei verschiebbar zwischen einer Anlaufkante 141 und dem festen Anschlag 16, der in der Platte 3 angeordnet ist. Die Koppel 13 ist in ihrem dem Anlenkpunkt 91 gegenüberliegenden Ende mit einem Langloch 131 ausgestattet, durch das ein in der Halterung 7 ortsfest angebrachter Stift 71 hindurchgeht. An der Koppel 13 ist ferner eine Feder 17 befestigt, die die Koppel 13, sofern sie aufgrund der Kippbewegung der Platte 3 eine Bewegung im Bereich des Langloches 131 durchführen kann, in Richtung zum Befestigungspunkt 72 der Feder 17, der auf der Halterung 7 angebracht ist, zieht. An dem verschiebbaren Anschlag 14 ist nun ein Vorsatz 11 angegliedert, der dem verschiebbaren Anschlag 14 gegenüber verschieblich angeordnet ist und von diesem über Federelemente 111 von dem Anschlag 14 weggedrückt werden kann. Bewegt sich nun der verschiebliche Anschlag 14 in Richtung des Pfeiles "O", so kann der Vorsatz 11, wenn er gegen ein Hindernis stößt sich federnd gegen den Anschlag 14 bewegen. Auf diese Weise wird die über die Spulenoberfläche, die auf der Kippvorrichtung 1 aufliegt, ragende Spulenhülse 51 von der Positioniereinrichtung 2 ergriffen und positioniert. Die Positionierung erfolgt unabhängig vom vorliegenden Spulendurchmesser, da sie sich ausschließlich nach der Spulenhülse 51 richtet. Die Abnahme der Spule 5 durch einen Greifer ist somit wesentlich erleichtert, da sich das Spulenzentrum bei den gleichen Spulenhülsendurchmessern immer an derselben Position befindet.

In der Platte 3 ist ein Bügel 32 verdrehbar um eine Drehachse 321 gelagert. Dieser Bügel wird durch eine Spiralfeder 3211, die sich in der Platte 3 abstützt in Richtung des Förderbandes 20 gedrückt und an einer Haltekante 331 des Schalters 33 festgehalten. Der auf der Platte 3 angebrachte Schalter 33 ist hier als induktiver Schalter ausgebildet, wobei der Schaltimpuls abhängig davon ausgelöst wird, ob vor dem Schalter ein metallischer Gegenstand vorhanden ist oder nicht. Im Beispielfall ist dieser metallische Gegenstand durch die Querstange 322 gegeben.

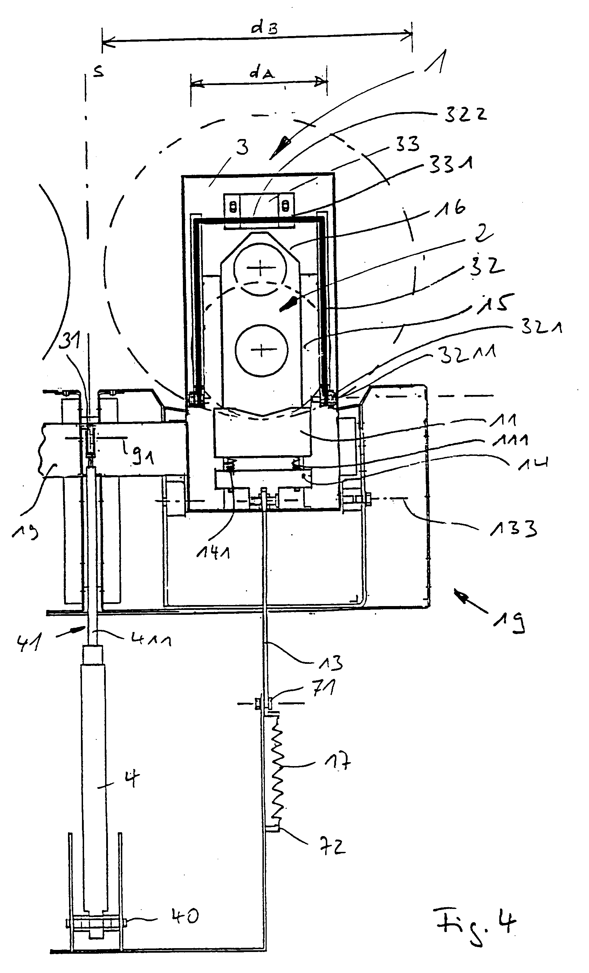

Der Bügel 32 ist als Doppelbügel ausgebildet, der im wesentlichen die Form eines umgekehrten "U" hat. Die Querstange 322 des Bügels (Figur 4) liegt in dem Zustand, in dem keine Spule gegen die Platte 3 drückt in dem Bereich des Schalters 33, in dem der Schalter 33 beeinflußt wird. Das Entfernen der Querstange 322 des Bügels 32 aus diesem Bereich hat zur Folge, daß der als Induktionsschalter ausgebildete Schalter 33 einen Schaltimpuls an eine nicht gezeigte Steuerung 18 der Vorrichtung weitergibt, um den Kippvorgang einzuleiten.

Der Vorgang läuft nun wie folgt ab: Das Transportband 6 bewegt sich in Richtung des Pfeiles "F" und trägt eine Spule 5 zur Kippvorrichtung 1. Die Spule 5 verläßt das Transportband 6 und gelangt auf das Tragblech 9, angeschoben durch die Wirkung des Transportbandes 6 und schiebt den Bügel 33 in Richtung der Platte 3, so daß sich dieser Bügel 33 um die Achse 321 dreht und der Spule 5 ausweicht. Dadurch wird der querliegende Teil 322 des Bügels 32 aus dem Wirkbereich des Schalters 33 bewegt und löst damit das Abschalten des Antriebes des Transportbandes 6 aus. Gleichzeitig wird durch den Schalter 33 ein nicht gezeigtes Magnetventil gesteuert, das den Pneumatikzylinder 4 derart beaufschlagt, daß die Kolbenstange 411 sich in den Zylinder des Pneumatikzylinders 4 hineinbewegt. Da nun die Kolbenstange 411 im Punkt 91 mit dem Hebelarm 31 der Platte 3 gekoppelt ist, wird durch die Bewegung der Kolbenstange 411 die Platte 3 (um die Drehachse 10) gekippt. Dies bewirkt gleichzeitig ein Drehen des Anlenkpunktes 133 der Koppel 13 an der Kippvorrichtung 1, respektive der Platte 3 um die Drehachse 10. Die Koppel 13 bewegt sich nun durch Schwerkraft und durch Unterstützung der Feder 17, die im Befestigungspunkt 72 an der Halterung 7 befestigt ist und andererseits am langlochseitigen Ende der Koppel 13 angreift, derart, daß der eine Anlenkpunkt 133 der Koppel um die Drehachse 10 gedreht wird und das andere Ende der Koppel 13 durch den im Langloch 131 "laufenden" Stift 71 gleichzeitig verdreht und verschoben wird, bis das "obere" Ende des Langloches vom Stift 71 erreicht wird. Ab diesem Moment wird die Koppel 13 nur noch um den ortsfesten Stift 91 gedreht, wodurch bewirkt wird, daß der an der Koppel 13 angelenkte verschiebbare Anschlag 14, der in der Platte 3 verschieblich angeordnet ist, sich in Richtung auf den festen Anschlag 16 bewegt und das in den Weg des verschieblichen Anschlages 14 ragende Ende der Spulenhülse 51 der Spule und damit die Spule 5 selbst in Richtung zum Anschlag 16 schiebt. Die Vorrichtung ist so eingestellt, daß bei Vollendung der Drehung der Platte 3 um die Drehachse 10 - das ist die Stellung, in der die Platte 3 am Anschlag 102 anliegt, die Spulenhülse 51 der Spule 5 genau soweit verschoben ist, daß sie am V-förmig ausgebildeten Anschlag 16 und am V-förmig ausgebildeten Vorsatz des beweglichen Anschlages 14 fest anliegt und somit definiert positoniert ist. (Diese Stellung zeigt Figur 3). Voraussetzung ist allerdings, daß mit dieser Einstellung auch ein eindeutiger Spulenhülsendurchmesser zugrundegelegt wird. Dies ist aber in der Regel keine Schwierigkeit, da die Spulenhülsen üblicherweise genormt sind. Auch für den Fall, daß die Spulenhülse eine konische Form hat, wird diese, vorausgestzt, daß die Spule mit dem größeren Spulendurchmesser in Richtung Kippvorrichtung orientiert war, richtig zwischen den beiden Anschlägen 14 und 16 positioniert und zentriert.

Im weiteren Verlauf wird ein nicht gezeigter Greifer, von oben kommend, die Spule 5 über die Spulenhülse 51 greifen und, sich nach oben bewegend die Spule 5 von der Platte 3 entfernen. Das bewirkt wiederum ein Zurückfedern des Bügels 32, so daß dieser wieder mit seiner Querstange 322 in den Wirkbereich des Schalters 33 gefedert wird und an eine nicht gezeigte Steuerung gemeldet wird, daß keine Spule 5 mehr auf der Platte 3 liegt. Nun wird, über ein Zeitglied oder über eine optische Abfrage gesteuert, bewirkt, daß das Magnetventil den Schaltimpuls bekommt, den Pneumatikzylinder 4 wieder mit Druck zu beaufschlagen, so daß die Kolbenstange 411 wieder ausgefahren und die Platte 3 der Kippvorrichtung 1 in die ursprüngliche aufrechte Lage zurückbewegt wird. Dabei wird zwangsläufig auch die Koppel 13 wieder nach oben bewegt und durch die Zwangsführung des Langloches 131, das ab einem gewissen Zeitpunkt am Stift 71 hängenbleibt, wird zwangsläufig der verschiebliche Anschlag 14 wieder vom festen Anschlag 16 wegbewegt und somit die Voraussetzung geschaffen, daß eine Spulenhülse 51 einer neuen Spule problemlos zwischen die beiden Anschläge "tauchen" kann, so daß derselbe Kippvorgang von vorne beginnen kann.

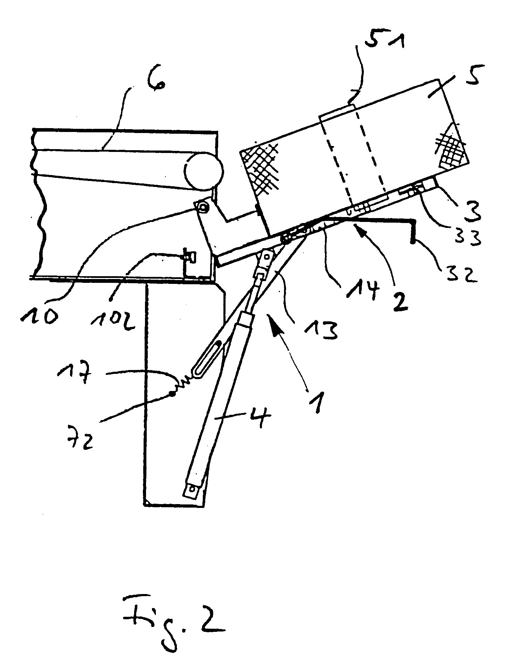

Figur 2 zeigt die Kippvorrichtung in der Situation, in der die Platte 3 soweit um die Drehachse 10 geschwenkt ist, daß der verschiebbare Anschlag 14 an die Spulenhülse 51 der Spule 5 angreift. In dieser Stellung beginnt der Positioniervorgang durch Verschiebung während des Kippens der Platte 3 von der aufrechten in die liegende Position.

In Figur 3 ist die schon oben beschriebene Position gezeigt, in der die Spule positioniert ist und bereitliegt zur Abnahme durch einen Greifer aus einer für die Greiferaufnahme vorgesehene Position. Die vor dem Kippen übereinanderliegenden Achsen A und B der kleinen und der großen Spule liegen nun am selben Ort. Die Spule 5 ist durch die Verschiebung des Anschlages 14 vom Tragblech 9 in Richtung zum festen Anschlag 16 weggeschoben.

Figur 4 zeigt eine erfindungsgemäße Ausführung der Vorrichtung, die an einem Doppelförderband angebracht ist, wobei vorteilhafterweise für zwei Platten 3 nur ein Pneumatikzylinder 4 notwendig ist. Die Vorrichtung ist aus Platzgründen nicht komplett gezeigt. Man stelle sie sich an der Symmetrieachse "S" gespiegelt vor. Die beiden Platten 3 sind mit einem Verbindungsblech 19 verbunden, wobei der Anlenkpunkt 91 des Hebelarmes 31 der Platte 3 jeweils aus der Platte 3 herausverlegt ist, genau in die Mitte zwischen den beiden Platten 3. Damit wird erreicht, daß nur ein Zylinder 4 notwendig ist und zwar jeweils für die zu kippende Platte 3, die gerade im Einsatz ist. Es ist von Vorteil, den Belade- und Entladezyklus der Förderbänder so zu regeln, daß ein Förderband von einer nicht gezeigten Vorrichtung mit Spulen beladen wird und während dieses Vorganges steht, während das andere Förderband entladen wird, indem eben die Spulen zum Ende des Förderbandes gebracht werden, gekippt, positioniert und entsorgt werden. Es ist auch denkbar, diese Einrichtung für drei und mehr nebeneinander angeordnete Förderbänder mit nur einem Pneumatikzylinder auszurüsten, der dann evtl. etwas stärker ausgelegt werden müßte, um das Leergewicht der Vorrichtung zu kompensieren.

Diese Mehrfachanordnung von Platten 3 an einer Kippeinrichtung 1 ist natürlich auch direkt an das Spulenförderband einer spulenproduzierenden Maschine einsetzbar. Statt eines Pneumatikzylinders kann an dieser Stelle auch ein Schneckenantrieb oder Zahnrad/Zahnstangenantrieb treten. Die Schalt- und Steuereinrichtung über den Bügel 32 und den Schalter 33 kann auch durch konventionelle Schalter und/oder Sensoren ersetzt werden. Es ist auch denkbar, daß der Bügel 32 direkt ein pneumatisches Ventil zur Steuerung des pneumatischen Zylinders 4 betätigt. Der Impuls zum Auslösen des Kippvorganges kann auch von einer indirekten Steuerung eingeleitet werden, die beispielsweise die Position der auf dem Transportband 6 angelieferten Spule an der zum Kippen relevanten Stelle feststellt. Die Koppel 13 kann auch ohne Langloch ausgeführt werden, indem anstelle des Langloches am Ende der Koppel nur eine Bohrung vorgesehen ist, durch die der Stift 71 gesteckt wird. Damit ist es aber nicht mehr mögich, sämtliche zwischen den Anschlägen in der "geöffneten" Stellung vom Förderband angelieferten verschiedenen Spulengrößen sicher und genau zu kippen. Die verarbeitbare Bandbreite der verschiedenen Spulendurchmesser wäre wesentlich geringer. Figur 4 zeigt auch die Anordnung des Anschlages 11, der über Stifte 141 und Federelemente 111 elastisch mit dem verschiebbaren Anschlag 14 verbunden ist. Der Vorsatz 11 und der Anschlag 14 laufen beispielsweise in Feder-/Nut- oder sonstigen formschlüssig ausgebildten Führungen 15. Es ist in Figur 4 auch deutlich gezeigt, in welchem Bereich die Spulendurchmesser liegen, die verarbeitet werden können, ohne daß die Kippvorrichtung irgendwelche besonderen oder aufwendigen Einrichtungen aufweist. Der verarbeitbare Bereich von Spulendurchmessern liegt hierbei zwischen d_{A} und d_{B}.

Die Erfindung ist nicht auf die gezeigte Ausführungsform beschränkt. Es ist beispielsweise auch möglich, die erfindungsgemäße Vorrichtung statt ortsfest an Transportbändern oder dergliechen anzuordnen, in fahrbaren Palettier- oder Verpackungsvorrichtungen vorzusehen, die an das zu entladende Transportband heranfahren und den Entladevorgang durchführen.

## Patentansprüche

1. Verfahren zum Positionieren von Spulen, die durch eine Fördereinrichtung angeliefert werden und aus der Förderlage mittels einer Kippvorrichtung in eine zur Aufnahme durch einen Greifer geeignete Lage gekippt werden, wobei die Spulen mit unterschiedlichen Durchmessern und mit horizontaler Spulenachse angeliefert und in eine vertikale Lage gekippt werden, die einzelne Spule in der Kippvorrichtung und vor der Aufnahme durch den Greifer bezüglich ihrer Achse zentriert wird, und der Greifer die Spule unabhängig von ihrem Durchmesser an einer vorbestimmten Position aufnimmt, dadurch gekennzeichnet, daß die Positionierung in Längs- und Querrichtung erfolgt und die Spulenachse in ihrer Endposition festgelegt wird.

2. Verfahren nach Anspruch 1, dadurch gekennzeichnet, daß der Kippvorgang durch die angelieferte Spule gestartet wird.

3. Verfahren nach Anspruch 2, dadurch gekennzeichnet, daß durch die mittels der Fördereinrichtung angelieferte Spule ein Schalter der Kippvorrichtung betätigt wird.

4. Verfahren nach einem der Ansprüche 1 bis 3, dadurch gekennzeichnet, daß die Spule mittels ihrer über die Spulenoberfläche hinausragenden Hülse positioniert wird.

5. Verfahren nach einem oder mehreren der Ansprüche 1 bis 4, dadurch gekennzeichnet, daß der Positioniervorgang erst nach dem Beginn des Kippvorganges einsetzt.

6. Verfahren nach einem oder mehreren der Ansprüche 1 bis 5, dadurch gekennzeichnet, daß die Spule mittels der Fördereinrichtung gegen die Kippvorrichtung geführt wird, die Spule mittels der Kippvorrichtung gekippt und vor oder mit dem Ende der Kippbewegung an einem Anschlag positioniert wird.

7. Vorrichtung insbesondere zur Durchführung des Verfahrens nach einem der Ansprüche 1 bis 6 mit einer Kippvorrichtung (1) zum Kippen einer zugeführten Spule (5) und einer Positioniervorrichtung (2) zur Vorbereitung der Abnahme der Spule (5) an einer vorbestimmmten Position, wobei die Positioniervorrichtung (2) in die Kippvorrichtung (1) integriert ist und auf eine Spulenhülse (51) einwirkende Anschläge (14, 16) zum Zentrieren und Positionieren der Spule (5) aufweist, dadurch gekennzeichnet, daß die Anschläge (14, 16) die Spule in Längs- und Querrichtung positionieren, und die Spulenachse (A; B) in ihrer Endposition festlegen.

8. Vorrichtung nach Anspruch 7, gekennzeichnet durch einen Schalter (33), über den die Kippbewegung eingeleitet wird.

9. Vorrichtung nach Anspruch 7 oder 8, dadurch gekennzeichnet, daß der Antrieb der Positioniervorrichtung (2) von der Bewegung der Kippvorrichtung (1) abgeleitet ist.

10. Vorrichtung nach einem oder mehreren der Ansprüche 7 bis 9, dadurch gekennzeichnet, daß die Kippvorrichtung (1) mit einem Pneumatikantrieb versehen ist.

11. Vorrichtung nach Anspruch 10, dadurch gekennzeichnet, daß der Pneumatikantrieb aus einem ortsfest schwenkbar gelagerten Pneumatikzylinder (4) besteht, dessen Kolben (41) eine Kolbenstange (411) betätigt, die an einem Hebelarm (31) der Kippvorrichtung (1) angelenkt ist.

12. Vorrichtung nach einem oder mehreren der Ansprüche 7 bis 11, dadurch gekennzeichnet, daß die Positioniervorrichtung (2) einen Anschlag (14) aufweist, der auf der Kippvorrichtung (1) gelagert und gegen einen festen Anschlag (16), der auf der Kippvorrichtung (1) angeordnet ist, verschiebbar ist.

13. Vorrichtung nach Anspruch 12, gekennzeichnet durch eine Koppel (13), die an ihrem einen Ende mit dem verschiebbaren Anschlag (14) verbunden ist und an dem anderen Ende beweglich in einem ortsfesten Lagerpunkt gelagert ist.

14. Vorrichtung nach Anspruch 13, dadurch gekennzeichnet, daß in dem ortsfesten Lagerpunkt ein Stift angeordnet ist, der durch ein in der Koppel (13) angeordnetes Langloch (131) eingreift.

15. Vorrichtung nach einem oder mehreren der Ansprüche 12 bis 14, dadurch gekennzeichnet, daß der maximale Abstand der Anschläge (14; 16) voneinander ein mehrfaches des Durchmessers (d) einer Spulenhülse (51) beträgt.

16. Vorrichtung nach einem oder mehreren der Ansprüche 12 bis 15, dadurch gekennzeichnet, daß die Anschläge (14; 16) V-förmig ausgebildet sind.

17. Vorrichtung nach einem oder mehreren der Ansprüche 12 bis 16, dadurch gekennzeichnet, daß der verschiebbare Anschlag (14) mit einem federnden Vorsatz (11) verbunden ist.

18. Vorrichtung nach einem oder mehreren der Ansprüche 9 bis 17, dadurch gekennzeichnet, daß die Kippvorrichtung (1) eine Platte (3) aufweist, die um eine waagrechte Achse (10) schwenkbar ist und einen Hebelarm (31) aufweist, an welchem der Antrieb der Kippvorrichtung (1) angreift, und daß die Platte (3) der Kippvorrichtung (1) einen Schalter (33) zum Auslösen der Kippbewegung aufweist.

19. Vorrichtung nach Anspruch 18, dadurch gekennzeichnet, daß der Schalter (33) ein Magnetventil ist, über das der Pneumatikzylinder (4) gesteuert wird.

20. Vorrichtung nach einem der Ansprüche 18 oder 19, dadurch gekennzeichnet, daß der Schalter (33) über einen über die Ebene der Platte (3) herausragenden Bügel (32) betätigbar ist.

## Claims

1. A method of positioning bobbins, delivered by a conveying device and tilted out of the conveying position by means of a tilting device into a position suitable for reception by a gripper, wherein the bobbins with different diameters and with a horizontal axis are delivered and tilted into a vertical position, the individual bobbin is centred with respect to its axis in the tilting device and before being received by the gripper, and the gripper receives the bobbin at a pre-determined position irrespectively of the diameter thereof, **characterized in that** the positioning takes place in the longitudinal and transverse directions and the axis of the bobbin is fixed in the final position thereof.

2. A method according to Claim 1, **characterized in that** the tilting procedure is initiated by the delivered bobbin.

3. A method according to Claim 2, **characterized in that** a switch of the tilting device is actuated by the bobbin delivered by means of the conveying device.

4. A method according to one of Claims 1 to 3, **characterized in that** the bobbin is positioned by means of its sleeve projecting beyond the surface of the bobbin.

5. A method according to one or more of Claims 1 to 4, **characterized in that** the positioning procedure takes place only after the beginning of the tilting procedure.

6. A method according to one or more of Claims 1 to 5, **characterized in that** the bobbin is conveyed towards the tilting device by means of the conveying device, the bobbin is tilted by means of the tilting device and is positioned at a stop before or at the end of the tilting movement.

7. A device in particular for performing the method according to one of Claims 1 to 6, having a tilting device (1) for tilting a delivered bobbin (5) and a positioning device (2) for preparing the removal of the bobbin (5) at a predetermined position, wherein the positioning device (2) is integrated in the tilting device (1) and comprises stops (14, 16) acting upon a bobbin sleeve (51) for centring and positioning the bobbin (5), **characterized in that** the stops (14, 16) position the bobbin (5) in the longitudinal and transverse directions, and the axis (**A**; **B**) of the bobbin is fixed in the final position thereof.

8. A device according to Claim 7, **characterized by** a switch (33) by which the tilting procedure is initiated.

9. A device according to Claim 7 or 8, **characterized in that** the drive of the positioning device (2) is taken off from the movement of the tilting device (1).

10. A device according to one or more of Claims 7 to 9, **characterized in that** the tilting device (1) is provided with a pneumatic drive.

11. A device according to Claim 10, **characterized in that** the pneumatic drive comprises a pneumatic cylinder (4) which is mounted so as to be pivotable and non-displaceable and the piston (41) of which actuates a piston rod (411) articulated to a lever arm (31) of the tilting device (1).

12. A device according to one or more of Claims 7 to 11, **characterized in that** the positioning device (2) has a stop (14) mounted on the tilting device (1) and displaceable against a fixed stop (16) arranged on the tilting device (1).

13. A device according to Claim 12, **characterized by** a coupling member (13) connected at one end thereof to the displaceable stop (14) and mounted at the other end so as to be movable in a non-displaceable bearing point.

14. A device according to Claim 13, **characterized in that** a pin engaging through an elongate hole (131) provided in the coupling member (13) is arranged in the non-displaceable bearing point.

15. A device according to one or more of Claims 12 to 14, **characterized in that** the maximum distance of the stops (14; 16) from each other is a multiple of the diameter (**d**) of a bobbin sleeve (51).

16. A device according to one or more of Claims 12 to 15, **characterized in that** the stops (14; 16) are V-shaped.

17. A device according to one or more of Claims 12 to 16, **characterized in that** the displaceable stop (14) is connected to a spring attachment (11).

18. A device according to one or more of Claims 9 to 17, **characterized in that** the tilting device (1) comprises a plate (3) pivotable about a horizontal axis (10) and comprising a lever arm (31) on which the drive of the tilting device (1) engages, and the plate (3) of the tilting device (1) comprises a switch (33) for initiating the tilting movement.

19. A device according to Claim 18, **characterized in that** the switch (33) is a solenoid valve by which the pneumatic cylinder (4) is controlled.

20. A device according to one of Claims 18 [and] 19, **characterized in that** the switch (33) is actuable by way of a yoke (32) projecting beyond the plane of the plate (3).

## Revendications

1. Procédé pour le positionnement de bobines livrées par une installation d'acheminement et reprises de leur position d'acheminement à l'aide d'un dispositif de basculement pour être amenées, par basculement, dans une position convenant pour leur reprise par un dispositif de préhension, les bobines livrées présentant des diamètres différents, leur axe étant positionné de façon horizontale avant qu'elles soient basculées pour avoir une position verticale, chaque bobine individuelle étant centrée dans le dispositif de basculement, par rapport à son axe, avant d'être reprise par le dispositif de préhension, le dispositif de préhension saisissant la bobine à une position prédéterminée, indépendamment de son diamètre, caractérisé en ce que le positionnement est effectué en sens longitudinal et transversal et que la position finale de l'axe de la bobine est prédéterminée.

2. Procédé selon la revendication 1, caractérisé en ce que l'opération de basculement est enclenchée par la bobine livrée.

3. Procédé selon la revendication 2, caractérisé en ce qu'un commutateur du dispositif de basculement est actionnée par la bobine livrée par l'installation d'acheminement.

4. Procédé selon une des revendications 1 à 3, caractérisé en ce que la bobine est positionnée à l'aide de son tube excédant la surface bobinée.

5. Procédé selon une ou plusieurs des revendications 1 à 4, caractérisé en ce que l'opération de positionnement n'est enclenchée qu'après l'enclenchement de l'opération de basculement.

6. Procédé selon une ou plusieurs des revendications 1 à 5, caractérisé en ce que la bobine est amenée par l'installation d'acheminement vers le dispositif de basculement, que la bobine est basculée au moyen du dispositif de basculement et qu'elle est positionnée à une butée avant ou en même temps que le mouvement basculant prend fin.

7. Dispositif notamment pour la mise en oeuvre du procédé selon une des revendications 1 à 6 comportant un dispositif de basculement (1) pour faire basculer une bobine amenée (5), et un dispositif de positionnement (2) pour le préparation de la reprise de la bobine (5) à une position prédéterminée, le dispositif de positionnement (2) étant intégré dans le dispositif de basculement (1) et comportant des butées (14, 16) agissant sur un tube (51) et servant au centrage et au positionnement de la bobine (5), caractérisé en ce que les butées (14, 16) positionnent la bobine (5) en sens longitudinal et transversal et qu'elles déterminent la position finale de l'axe de la bobine (A; B).

8. Dispositif selon la revendication 7, caractérisé en ce que le mouvement basculant est enclenché par un commutateur (33).

9. Dispositif selon la revendication 7 ou 8, caractérisé en ce que l'entraînement du dispositif de positionnement (2) s'ensuit du mouvement de l'installation de basculement (1).

10. Dispositif selon une ou plusieurs des revendications 7 à 9, caractérisé en ce que le dispositif de basculement (1) est pourvu d'une commande pneumatique.

11. Dispositif selon la revendication 10, caractérisé en ce que la commande pneumatique est constituée par un vérin pneumatique (4) stationnaire logé de façon orientable dont le piston (41) actionne une tige de piston (411) qui est articulée à un bras de levier (31) du dispositif de basculement (1).

12. Dispositif selon une ou plusieurs des revendications 7 à 11, caractérisé en ce que le dispositif de positionnement (2) comporte une butée (14) qui est logée sur le dispositif de basculement (1) et qui peut être déplacée par rapport à une butée fixe (16) prévue sur le dispositif de basculement (1).

13. Dispositif selon la revendication 12 caractérisé par une bielle (13) qui est reliée par une de ses extrémités à la butée déplaçable (14) et qui par son autre extrémité est montée de façon mobile à un point d'appui fixe.

14. Dispositif selon la revendication 13, caractérisé en ce qu'une tige est disposée au point d'appui fixe qui s'engage dans un trou oblong ménagé dans la bielle (13).

15. Dispositif selon une ou plusieurs des revendications 12 à 14, caractérisé en ce que la distance maximum des butées (14; 16), l'une par rapport à l'autre, constitue un multiple du diamètre (d) d'un tube (51).

16. Dispositif selon une ou plusieurs des revendications 12 à 15, caractérisé en ce que les butées (14; 16) présente une conformation en "V".

17. Dispositif selon une ou plusieurs des revendications 12 à 16, caractérisé en ce que la butée déplaçable (14) est reliée à un adaptateur (11) élastique.

18. Dispositif selon une ou plusieurs des revendications 9 à 17, caractérisé en ce que le dispositif de basculement (1) comporte une plaque (3) pivotable autour d'un axe horizontal (10) et comportant un bras de levier (31) sur lequel agit la commande du dispositif de basculement (1) et en ce que la plaque (3) du dispositif de basculement (1) comporte un commutateur (33) pour le délenchement du mouvement basculant.

19. Dispositif selon la revendication 18, caractérisé en ce que le commutateur (33) est une vanne électromagnétique par l'intermédiaire de laquelle le vérin pneumatique (4) est commandé.

20. Dispositif selon une des revendications 18 ou 19, caractérisé en ce que le commutateur (33) peut être actionné par l'intermédiaire d'un étrier (32) disposé en saillie du plan de la plaque (3).
